(19) Europäisches Patentamt
European Patent Office
Office européen des brevets

(11) Numéro de publication: **0 165 875**
**B1**

# (12) FASCICULE DE BREVET EUROPEEN

(45) Date de publication du fascicule du brevet: **11.05.88**

(51) Int. Cl.⁴: **C 03 B 19/10**

(21) Numéro de dépôt: **85401232.5**

(22) Date de dépôt: **20.06.85**

(54) **Perfectionnements aux techniques de production de microsphères en verre.**

(30) Priorité: **21.06.84 FR 8409736**

(43) Date de publication de la demande:
**27.12.85 Bulletin 85/52**

(45) Mention de la délivrance du brevet:
**11.05.88 Bulletin 88/19**

(84) Etats contractants désignés:
**AT BE CH DE FR GB IT LI LU NL SE**

(56) Documents cités:
**FR - A - 2 318 123**
**US - A - 3 838 998**

(73) Titulaire: **SAINT-GOBAIN VITRAGE, Les Miroirs 18, avenue d'Alsace, F-92400 Courbevoie (FR)**

(72) Inventeur: **Garnier, Patrick, 66, boulevard Garibaldi, F-75015 Paris (FR)**
Inventeur: **Abriou, Daniel, 3, avenue des Verveines, F-93220 Gagny (FR)**
Inventeur: **Coquillon, Michel, 7, rue de la Chantonne Chauconin/Neufmontiers, F-77100 Meaux (FR)**

(74) Mandataire: **Le Vaguerese, Sylvain Jacques et al, SAINT-GOBAIN RECHERCHE 39, quai Lucien Lefranc, F-93304 Aubervilliers Cedex (FR)**

EP 0 165 875 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention est relative à un procédé de production de microsphères creuses à partir de particules d'un verre silico-sodo-calcique renfermant des composés du soufre, et à une installation pour leur production d'après le préambule de la revendication 13, et de façon plus précise à celles de ces techniques dans lesquelles des fines particules solides d'un verre approprié sont expansées par un traitement thermique.

Une difficulté permanente propre à ces techniques réside dans l'obtention d'un produit présentant des propriétés définies bien homogènes, en un minimum d'opérations simples. En particulier, si la solution consistant à former les microsphères par passage des particules dans un brûleur présente un certain nombre d'avantages, ce type d'opérations n'est ordinairement pas très satisfaisant au plan de son rendement et de la qualité des produits obtenus. Ceci s'explique notamment par la difficulté de conduire le traitement de façon parfaitement uniforme pour l'ensemble des particules. Une part non négligeable de la masse des particules traitées ne se retrouve pas sous forme expansée à l'issue du traitement.

Des produits de qualité peuvent être obtenus dans les conditions antérieurement connues, mais pour cela il est ordinairement nécessaire d'ajouter au traitement d'expansion thermique des opérations très rigoureuses de tri qui limitent le rendement et accroissent sensiblement le coût de production.

Pour améliorer le rendement de l'expansion des particules, une solution envisagée antérieurement consiste à prolonger le temps de traitement thermique. Mais, on constate que si une proportion plus grande des particules traitées est expansée, cette façon de faire entraîne des risques accrus de voir les particules ainsi maintenues dans un état visqueux se coller aux parois de l'appareil dans lequel elles sont produites ou même les unes aux autres pour former des agrégats indésirables.

Une autre difficulté vient de ce que les particules expansées maintenues trop longtemps à température élevée peuvent laisser diffuser le gaz d'expansion et conduire à des particules plus denses par suite du «dégonflage».

Pour minimiser ces difficultés, les solutions antérieurement proposées notamment dans les brevets US n° 3 365 315 et 4 391 646 tendent à limiter la température de traitement ce qui par contre-coup impose des limites plus rigoureuses en ce qui concerne la composition initiale ou les dimensions des particules susceptibles d'être traitées efficacement.

Un but de l'invention est de proposer une technique de production de microsphères à partir de particules de verre contenant notamment des composés de soufre par un traitement thermique dont le rendement soit amélioré.

Un autre but de l'invention est de faire en sorte que la technique en question puisse être réalisée dans des conditions de coût avantageuses.

Un autre but de l'invention est de permettre l'utilisation d'une gamme de matériaux plus large que précédemment. Notamment, l'invention a pour but de permettre le traitement de verres dont la teneur en soufre est relativement basse. De même, l'invention a pour but de permettre le traitement de particules dont les dimensions sont éventuellement plus petites que les particules antérieurement traitées.

Un autre but de l'invention est, en maîtrisant les conditions dans lesquelles s'effectue l'expansion das particules, de conduire à des produits dont les propriétés sont mieux contrôlées.

Il est ainsi apparu selon l'invention, et contrairement à ce qui est dit dans la littérature antérieure, qu'il peut être avantageux d'effectuer l'expansion des particules à des températures accrues par rapport aux conditions mises en oeuvre de façon traditionnelle.

L'art antérieur enseigne, en effet, qu'il est nécessaire d'opérer l'expansion à une température nettement inférieure à celle utilisée lors de la fusion des matières premières pour l'obtention de la masse vitreuse dont les particules sont constituées.

La presente invention a donc pour objet un procédé de production de microsphères creuses à partir de particules d'un verre silico-sodo-calcique renfermant des composés du soufre, caractérisé en ce que les particules mises en suspension dans un courant gazeux passent dans la chambre de combustion d'un brûleur à une température supérieure d'au moins 100°C à celle d'élaboration du verre constituant les particules traitées, à partir des matériaux de base traditionnels tels que sable, chaux, carbonate de sodium, sulfate de sodium et autres, le traitement thermique étant maintenu pendant une période qui n'excède pas 0,1 seconde et les particules étant ensuite figées par refroidissement brutal.

La presente invention a egalement pour objet une installation pour la production de microsphères creuses à partir de particules d'un verre silico-sodo-calcique, contenant du soufre, comprenant des moyens pour la mise en suspension des particules dans un courant gazeux, lequel est dirigé vers une chambre de combustion d'un brûleur caractérisé en ce que le brûleur est alimenté de façon à entretenir une combustion à une température supérieure à 1500°C, l'introduction des particules dans le brûleur étant située de façon que leur mouvement s'effectue dans le sens de progression des gaz de combustion et la longueur de la chambre de combustion étant choisie en fonction du régime de combustion adopté, de façon que le temps de séjour moyen des particules soit au plus égal à 0,1 seconde, une chambre de trempe faisant suite immédiatement à la chambre de combustion, laissant pénétrer abondamment l'air ambiant sous l'effet d'une aspiration entretenue depuis l'extrémité des moyens de séparation solides/gaz, et des moyens de séparation pour recueillir les particules transportées par les gaz avant le rejet de ces derniers.

Selon l'invention, la température de traitement est sensiblement supérieure à celle de fusion des matières premières. Pour le même type de verre silico-sodo-calcique l'expansion selon l'invention est conduite à une température supérieure à 1500°C, et de préférence supérieure à 1550°C, soit approximativement une température qui est au moins 100°C supérieure à celle d'élaboration du verre.

Il faut noter que dans la littérature, en particulier

dans le brevet US 3 838 998, il est fait état de traitements thermiques qui peuvent se situer aux niveaux considérés selon l'invention. Il s'agit cependant dans ce cas de traitements de matériaux très différents des verres silico-sodo-calciques de l'invention. En outre, les températures dont il est question s'appliquent à une pâte et ont pour but de fusionner les constituants pour aboutir à une verre. Au contraire, selon l'invention, le traitement thermique est appliqué à des particules d'un verre préalablement formé.

Des raisons d'ordre technologique limitent ordinairement les températures de traitement. Il est très difficile d'atteindre, pour ce type d'opération et dans des conditions économiques, des températures supérieures à 1750°C.

De façon préférée, la température de traitement selon l'invention se situe entre 1550 et 1700°C.

Dans les conditions de l'invention, la température de traitement est maintenue pendant un temps extrêmement bref. Compte tenu de la dimension des particules utilisées, une durée de traitement de quelques millièmes de seconde est généralement suffisante pour obtenir un bon rendement. Une prolongation du traitement s'avère le plus souvent inefficace à accroître le rendement.

En particulier selon la granulométrie moyenne des particules initiales, le temps de traitement peut être très bref. Pour des particules inférieures à 20 micromètres, le temps de traitement ne sera avantageusement pas supérieur à 0,02 seconde.

La température des microsphères est ensuite ramenée rapidement au-dessous de celles correspondant au ramollissement du matériau par un mélange intense avec de l'air froid. Pour figer les sphères formées, la température doit être ramenée à moins de 1000°C et de préférence à moins de 750°C. Ces températures sont atteintes pratiquement immédiatement en introduisant dans le réacteur une quantité suffisante d'air à température ambiante.

La quantité d'air pour figer les microsphères n'est limitée que par des considérations d'ordre pratique. Pour obtenir une bonne trempe des microsphères, le volume de l'air ambiant est au moins égal à deux fois celui des gaz de traitement portant les sphères.

Un volume supérieur à trois ou quatre fois celui des gaz chauds, même s'il est supposé conduire à une trempe plus efficace, se heurte à des difficultés en ce qui concerne un mélange complet et rapide.

Contrairement à ce que les documents antérieurs pouvaient laisser penser, les inventeurs ont montré que la nature de l'atmosphère dans laquelle s'effectue le traitement est un facteur très sensible pour le résultat de l'expansion des particules renfermant des composés du soufre.

La décomposition thermique habituellement envisagée, transforme les composés soufrés en anhydride sulfurique lequel est en partie décomposé en anhydride sulfureux selon le schéma:

$$\left\{\begin{array}{l} SO_4^{2-} \rightarrow SO_3\nearrow + O^{2-} \\ SO_3 \rightarrow SO_2\nearrow + 1/2\ O_2 \end{array}\right.$$

Les sulfates sont présents dans de nombreux verres industriels. Leurs teneurs varient dans des proportions très importantes. Dans les verres utilisés pour la formation de vitrages, verres qui constituent une application industrielle particulièrement importante, les sulfates, par leur capacité à se décomposer, jouent un rôle important dans l'affinage lors de l'élaboration de la masse vitreuse. Le dégagement des bulles de $SO_3$ est un moyen efficace d'entraîner les particules ou gaz occlus de la masse en fusion. Dans ces verres, il va de soi que la teneur en sulfate résiduelle est d'autant plus faible que l'affinage est plus intense et plus prolongé. Nous verrons plus loin quelles conséquences ceci entraîne en ce qui concerne l'invention.

Les inventeurs ont montré qu'en atmosphère réductrice et notamment en atmosphère contenant de l'hydrogène, et de façon préférée de l'hydrogène naissant, des phénomènes d'oxydo-réduction interviennent dans le processus de formation des microsphères.

Un mécanisme supposé comprend comme précédemment la décomposition thermique suivie de la réduction de l'anhydride sulfurique selon le schéma suivant:

$$\left\{\begin{array}{l} SO_4^{2-} \rightarrow SO_3\nearrow + O^{2-} \\ SO_3 + H_2 \rightarrow SO_2\nearrow + H_2O \end{array}\right.$$

En fait, une étude plus approfondie semble même montrer que la réduction s'effectue directement sur le sulfate sans passer par la phase gazeuse intermédiaire. La réaction serait alors du type:

$$SO_4^{2-} + H_2 \rightarrow SO_2\nearrow + H_2O + O^{2-}$$

Quel que soit le mécanisme exact, la réduction doit être favorable à l'expansion des particules pour diverses raisons.

Une première raison est liée à la nature du gaz servant à l'expansion. En effet, à haute température l'anhydride sulfurique se redissout dans le verre en fusion, et une partie des microsphères subit ainsi un collapsus avant d'être figée.

En présence d'une réduction chimique, on ne décèle plus d'anhydride sulfurique dans le gaz occlus. L'anhydride sulfureux est pratiquement insoluble dans le verre contrairement à l'anhydride sulfurique. La sphère formée reste donc stable à condition d'être refroidie avant que des risques de collage ne se produisent.

L'expérience montre aussi que la désolubilisation de l'anhydride est plus intense en milieu réducteur. Indépendamment des transformations opérées sur les composés soufrés, on favorise donc encore l'expansion des particules.

Une autre raison expliquant les avantages d'une réaction comprenant une réduction est la rapidité avec laquelle elle s'opère. Ceci est lié semble-t-il au fait que la diffusion de l'hydrogène (et notamment de l'hydrogène naissant) dans toute la particule est extrêmement rapide. Ainsi d'une certaine façon, la vitesse de traitement pourrait être moins sensible à la dimension des particules.

Par ailleurs, la rapidité a pour avantage de permettre un traitement à température relativement plus élevée et pendant une période de temps plus brève, ces deux conditions ayant pour conséquence d'une

part un traitement «thermique» plus énergique favorisant l'expansion des microsphères et d'autre part une limitation des risques de collage.

L'intensité de la réduction n'est pas totalement indépendante de la température. Les conditions réductrices résultent normalement de la marche d'un brûleur et du rapport de la quantité de combustible à la quantité totale des gaz utilisés pour produire la combustion. Le rapport en question conduit à une atmosphère réductrice lorsque le gaz combustible est en excès. On ne se situe donc pas aux conditions stoechiométriques qui permettent d'atteindre les températures de flamme les plus élevées.

Par ailleurs dans les gaz de combustion, les équilibres qui s'établissent sont dépendants des conditions de température; la formation des agents réducteurs et notamment de l'hydrogène est d'autant plus intense que la température est plus élevée.

Pour ces raisons notamment, les conditions de températures et celles d'oxydo-réduction, de préférence, doivent être fixées conjointement.

Il faut encore signaler, ce qui n'apparaît pas sur les diagrammes théoriques, que le craquage des gaz combustibles, par exemple du méthane, est plus intense à la surface même des particules. Ces dernières jouent certainement le rôle d'initiateur de combustion et l'atmosphère enveloppant ces particules est sensiblement différente de celle correspondant à l'ensemble de la masse gazeuse mise en oeuvre et que l'on analyse à la sortie du dispositif de traitement.

Un autre avantage du mode de traitement réducteur selon l'invention est de faciliter l'expansion même lorsque le taux initial d'agent d'expansion, c'est-à-dire la teneur du verre en composé du soufre, est relativement faible. On constate en effet une meilleure «utilisation» de cet agent d'expansion. L'analyse du verre des sphères produites en atmosphère réductrice montre une teneur résiduelle en soufre moindre que celle des sphères produites en atmosphère oxydante. Ceci permet, le cas échéant, d'utiliser diverses sources pour produire les particules que l'on expanse et notamment des calcins de verres pauvres en composés soufrés, en particulier les calcins provenant des verres ayant subi in affinage poussé.

La faible teneur en soufre des verres bien affinés a pour contrepartie une meilleure homogénéité du verre qui elle-même permet, toutes choses égales par ailleurs, une amélioration du rendement d'expansion et l'obtention de microsphères présentant des qualités mécaniques particulièrement remarquables. La mise en oeuvre du procédé selon l'invention avec ces verres très affinés est donc avantageuse.

On comprend aussi qu'en maîtrisant un facteur indépendant, ou partiellement indépendant, de la température on dispose de possibilités sensiblement accrues pour diriger l'opération dans le sens d'une production de microsphères présentant des caractéristiques mieux définies. En particulier, il est possible par ce moyen de favoriser la formation de microsphères de masse volumique déterminée.

Nous avons vu que le caractère réducteur de l'atmosphère environnant les sphères en cours de formation était un facteur favorable pour la mise en oeuvre de l'invention. La création de cette atmosphère à température élevée est avantageusement obtenue en opérant dans un brûleur dont la flamme est entretenue avec un mélange dont le rapport combustible/oxydant est supérieur à celui correspondant à des conditions stoechiométriques.

Le caractère réducteur du mélange gazeux du brûleur dans lequel s'effectue la réaction peut être exprimé selon l'invention par «le facteur d'air», c'est-à-dire la quantité d'air effectivement introduite dans le brûleur par rapport à celle qui serait nécessaire pour avoir une combustion neutre. L'expérience montre que le traitement, et en particulier le rendement d'expansion, est très sensible à des variations de ce facteur. Avantageusement le facteur d'air, pour les températures considérées, n'est pas inférieur à 0,75, et de préférence est compris entre 0,8 et 0,95.

Il est difficile en pratique de descendre en-dessous d'un facteur d'air de 0,75. En dessous de cette valeur, la combustion obtenue conduit à des températures habituellement inférieures à celles requises selon l'invention. Par ailleurs, une diminution trop importante du facteur d'air accroît le coût du traitement en requérant, pour un même dégagement énergétique, une consommation plus importante de combustible.

Le caractère réducteur de l'atmosphère de traitement peut être aussi défini par la teneur en gaz réducteurs présents, en notamment en hydrogène, ce gaz comme l'ont montré les études des inventeurs étant l'agent réducteur le plus probable compte tenu notamment de sa rapidité à diffuser dans le verre fondu.

S'il apparaît avantageux pour la réaction d'expansion d'avoir une atmosphère présentant un certain taux d'hydrogène, il semble que cette teneur doive rester limitée. Un traitement en atmosphère trop réductrice pourrait modifier les qualités structurelles du verre formant les microsphères.

Le traitement réducteur conduisant à l'expansion des microsphères est donc de préférence limité aux conditions qui ne modifient pas sensiblement leurs propriétés.

Expérimentalement, pour la production de microsphères dont les caractéristiques sont présentées plus loin, un taux d'hydrogène inférieur à 4% dans les gaz de traitement permet d'atteindre un bon rendement d'expansion sans modifier la qualité des microsphères obtenues. De préférence, ce taux est inférieur à 3%.

Comme nous l'avons indiqué précédemment, ce taux d'hydrogène est un taux global mesuré sur l'ensemble des gaz de combustion. Ce taux n'est qu'indicatif du caractère réducteur dans l'atmosphère entourant immédiatement les particules dans la mesure où celles-ci servent de «catalyseurs» sur lesquels se forme l'hydrogène.

Le caractère réducteur de la combustion dépend aussi, dans une certaine mesure, de la nature du gaz combustible choisi. Il peut être avantageux de choisir un gaz dont le craquage est relativement intense dans les conditions de l'invention. Ainsi, l'utilisation de propane comme gaz de combustion peut être préférée à celle de méthane dans la mesure où le premier

conduit à un dégagement d'hydrogène plus abondant.

Il faut préciser encore que le caractère réducteur peut n'être développé que pendant une partie du traitement. Compte tenu des mécanismes mis en jeu, il peut apparaître avantageux de limiter l'effet de réduction au début du traitement. Dans ce premier temps, on réalise la transformation des composés du soufre en anhydride sulfureux insoluble dans le verre. Cette transformation étant réalisée, il va de soi que l'atmosphère environnante peut redevenir neutre ou même légèrement oxydante pour la fin du traitement.

Comme nous l'avons dit le traitement est ordinairement conduit dans la flamme d'un brûleur. La succession d'étapes réductrice et neutre ou même légèrement oxydante est obtenue, par exemple, en faisant progresser les particules à travers la flamme depuis une zone initialement riche en gaz combustible dans des zones où le mélange gazeux devient stoechiométrique ou même légèrement plus riche en air. Dans ces conditions, même si globalement le mélange gazeux issu du brûleur est légèrement oxydant, initialement le traitement bénéficie des avantages liés aux conditions réductrices. Bien entendu la succession des ces étapes n'intervient effectivement dans le processus de développement des microsphères qu'en raison de l'extrême rapidité des phénomènes mis en jeu, notamment de la diffusion de l'hydrogène dans les particules de verre.

Dans le cas où globalement le mélange gazeux est oxydant, ce caractère est nécessairement limité, à défaut, il serait difficile d'avoir dans la flamme une zone efficace présentant un caractère réducteur. Il serait aussi difficile d'atteindre les températures appropriées. Expérimentalement, on constate que le facteur d'air ne doit pas dépasser 1,1 et de préférence doit rester inférieur à 1,05.

La composition pondérale des verres les plus couramment utilisés pour les applications traditionnelles, est, pour les principaux éléments, du type suivant:

| | |
|---|---|
| $SiO_2$ | 55 - 80% |
| $Na_2O + K_2O + Li_2O$ | 8 - 18% |
| $CaO + MgO + BaO + ZnO$ | 4 - 14% |
| $Al_2O_3$ | 0 - 5% |
| $B_2O_3$ | 1 - 15% |
| F | 0 - 5% |

A ces éléments traditionnels, il faut encore ajouter ceux qui apparaissent habituellement à titre d'impuretés plus ou moins abondantes: $Fe_2O_3$, $P_2O_5$, $Cr_2O_3$, ..., qui ne dépassent normalement pas 10% en poids de l'ensemble.

Dans ces verres, sont aussi présents des composés oxygénés du soufre. Leur teneur peut être très largement variable. De façon générale la teneur en soufre des verres ne dépasse pas 0,5% en poids de particules avant leur expansion, mais des teneurs beaucoup plus faibles suffisent pour assurer une expansion conduisant à des microsphères de masse volumique aussi basse que 0,1 g/cm$^3$.

De façon générale si, toutes conditions égales par ailleurs, la teneur initiale en soufre peut influer sur le degré d'expansion atteint, elle ne constitue une limite que pour la production de microsphères fortement expansées. C'est le cas par exemple lorsqu'on opère à partir de particules contenant de très faibles quantités de soufre, par exemple moins de 0,01%.

Pour ces teneurs, et même pour des teneurs encore plus faibles, l'expansion demeure possible dans les conditions de l'invention, mais les microsphères produites présentent alors généralement une masse volumique plus élevée. Loin de constituer un désavantage, cette dernière caractéristique peut être recherchée. C'est le cas en particulier lorsque les microsphères sont destinées à des usages pour lesquels une résistance à la pression hydrostatique très élevée est nécessaire. On constate en effet une corrélation très nette entre la masse volumique des microsphères et cette résistance à la pression. Plus la masse volumique est élevée, plus grande est la résistance.

La possibilité selon l'invention d'expanser des particules de verre à faible teneur en soufre est un avantage certain. Il est possible ainsi d'utiliser comme matière première des calcins provenant de la fabrication de verre flotté dont la teneur en soufre est toujours très basse par suite de l'affinage prolongé et à haute température que l'on fait subir à ce type de verre. D'ordinaire, la teneur en soufre est inférieure à 0,1%. Même ces verres ont conduit à de bons résultats en les traitant par le procédé selon l'invention.

En comparaison des techniques antérieures, celle selon l'invention permet donc soit d'atteindre une expansion plus forte soit d'expanser des verres qui, auparavant, auraient été considérés comme ne convenant pas à cet usage.

Des considérations analogues peuvent être faites en ce qui concerne les dimensions des particules traitées.

De préférence, les particules de verre utilisées pour produire des microsphères ont des dimensions inférieures à 100 micromètres pour les plus volumineuses. Bien que des particules plus grosses puissent être expansées, leur traitement est habituellement rendu plus délicat pour la raison qu'étant plus massives, le temps de traitement est nécessairement plus long ce qui n'est pas souhaitable comme nous l'avons indiqué précédemment.

Tradionnellement les particules très fines sont également écartées car il est plus difficile d'obtenir leur expansion. Il s'agit des particules inférieures à 10 micromètres, ou au moins inférieures à 5 micromètres.

De façon avantageuse on constate que, selon l'invention, une forte proportion de ces particules très petites inférieures à 20 micromètres et allant jusqu'à 5 micromètres ou moins, subit une expansion conduisant à des microsphères satisfaisantes dans des proportions exploitables.

Les raisons de ce résultat ne sont pas parfaitement connues. On peut cependant penser qu'elles sont liées à la rapidité du traitement et à la forte température qui permettent de développer l'expansion en limitant les pertes en agent d'expansion. Au cours du traitement thermique des particules, on constate en effet une modification non négligeable de la composition d'ensemble. En particulier, la teneur en soufre des microsphères est sensiblement inférieure à celle des particules ceci même en tenant compte du

contenu gazeux emprisonné dans la shpère. Autrement dit, au cours du traitement thermique, une fraction importante du soufre est éliminée. Cette fraction peut atteindre et dépasser 30% du soufre initialement présent.

Diverses raisons peuvent faire que le soufre s'évacue moins vite des particules les plus grosses, notamment le fait que les particules présentent un rapport surface/masse d'autant plus petit que les particules sont plus grosses. Les pertes par échange avec l'atmosphère qui sont fonction de la surface offerte sont donc relativement moindres.

Une autre raison vient du fait que vraisemblablement pour les particules les plus grosses, et donc pour lesquelles le traitement est comparativement le plus long, une couche superficielle se forme dont les caractéristiques sont différentes de celles de la masse interne. Cette couche aurait tendance à s'opposer aux échanges ultérieurs entre l'intérieur de la particule et l'atmosphère avoisinante. L'agent d'expansion resterait emprisonné dans cette couche superficielle.

Lorsque selon l'invention le traitement (combiné avec la réduction) est très rapide, on peut penser que le gaz dégagé n'a pas le temps de s'échapper même des petites particules avant que celles-ci soient à nouveau figées. Une plus forte proportion de particules serait ainsi expansée.

Quelles qu'en soient les raisons effectives, cet accroissement important de la fraction des particules de petites dimensions qui sont transformées en microsphères est un facteur très favorable du procédé selon l'invention.

En opérant selon l'invention, on obtient des microsphères qui peuvent présenter une grande variété de dimensions, de masses volumiques, de compositions de verre. Les conditions de départ sont bien entendu capitales. Ainsi, la granulométrie initiale détermine pour une part importante les dimensions finales même si la nature du verre et le traitement jouent également des rôles importants.

Une particularité des procédés selon l'invention comme nous l'avons signalé est de permettre la production de microsphères à partir de particules plus petites, les microsphères produites étant elles-mêmes plus petites. Il est possible par les traitements selon l'invention de produire, avec un rendement satisfaisant, des microsphères dont les diamètres moyens sont de l'ordre de 5 micromètres notamment avec des masses volumiques plus élevées.

Pour les usages les plus courants les microsphères produites présentent des diamètres compris entre 20 et 100 micromètres. Les plus grosses microsphères produites ordinairement ne dépassent pas 200 micromètres.

La masse volumique des microsphères produites se situe entre 0,1 et 2,2 g/cm$^3$.

Cette masse volumique est contrôlable dans une certaine mesure en choisissant la teneur en soufre des particules, leurs dimensions et les caractéristiques du traitement lui-même.

De façon simplifiée, la masse volumique est d'autant plus faible que la quantité de soufre est plus élevée et que le traitement thermique est conduit à température plus élevée.

Pour obtenir un produit d'une grande régularité de propriétés il va de soi qu'il est préférable d'utiliser des particules dont la granulométrie est bien homogène. Dans ce cas, chaque particule subissant sensiblement le même traitement, les microsphères obtenues présentent aussi une grande homogénéité. Il est alors possible aussi de mieux contrôler les conditions pour aboutir aux dimensions et masse volumique souhaitées. Par ailleurs le traitement pouvant être bien adapté à la fraction traitée, il est possible d'atteindre des rendements d'expansion très élevés.

Outre la dimension des particules, l'expérience montre qu'il est avantageux que celles-ci présentent une forme aussi «sphérique» que possible. La formation de telles particules peut être favorisée lors du broyage. On utilise avantageusement à cet effet une technique de broyage en lit fluidisé ou à jets d'air.

Même lorsque une fraction de particules relativement inhomogènes est traitée selon l'invention, des rendements importants peuvent être atteints. En masse, le pourcentage de particules expansées, déterminé par flottation, est le plus souvent supérieur à 50% et se situe ordinairement aux environs de 55% et plus. Pour des fractions ayant fait l'objet d'un tri granulométrique initial plus rigoureux, le pourcentage peut atteindre et même dépasser 65%.

La littérature fait aussi souvent référence au pourcentage volumique, bien que cette valeur ne soit pas très significative puisqu'elle dépend du taux d'expansion ou ce qui est équivalent de la masse volumique moyenne. Dans les conditions de l'invention, si l'on considère le volume des particules expansées par rapport au volume d'ensemble du produit traité, le rendement dépasse ordinairement 90% et peut même dépasser 95%.

Une autre caractéristique avantageuse des techniques selon l'invention, liée à la fois à la température élevée et à l'action réductrice établie au moins pendant une partie du traitement, est la faible consommation énergétique pour produire ces microsphères. Cette consommation varie en fonction de nombreux paramètres mais s'établit en moyenne à des valeurs de l'ordre d'une diazaine de thermies par kg de particules traitées ou moins.

L'accroissement de la température de traitement dévrait se traduire en principe par un accroissement de la consommation énergétique. En fait, cet accroissement est très faible ou inexistant dans les conditions de l'invention. Mais surtout cette consommation est particulièrement faible lorsqu'elle est rapportée au produit expansé et non plus au produit initial, compte tenu du taux élevé d'expansion.

Les exemples suivants illustrent de façon détaillée divers aspects de l'invention.

*Exemple 1*

Dans une première série d'essais, une composition de 900 kg de verre est préparée dans un pot à la température de fusion de 1250°C. La durée de fusion est de 18 heures. Les matériaux fondus sont les suivants:

| | |
|---|---|
| Sable | 494,5 kg |
| Spath fluor | 27 kg |
| Feldspath | 5,8 kg |

| | |
|---|---|
| Borax hydraté | 157,2 kg |
| Dolomie | 11,3 kg |
| $CaCO_3$ | 47,8 kg |
| ZnO | 19,4 kg |
| Carbonate de sodium | 124 kg |
| Sulfate de sodium | 12,7 kg |
| $Fe_2O_3$ | 0,3 kg |
| | 900 kg |

La masse est fondue en atmosphère oxydante. Après avoir été coulé et refroidi, le verre est concassé en fragments de quelques centimètres puis dans un second broyeur en particules de quelques millimètres.

Un dernier broyage dans un broyeur à boulets conduit la poudre à une granulométrie inférieure à 100 micromètres.

Un tri sur sélecteur dynamique permet d'isoler une fraction encore relativement large de particules dont les dimensions sont comprises, pour cet essai, entre 7 et 50 micromètres et correspond à 80% en poids des particules sortant du dernier broyeur.

L'analyse chimique pondérale de la composition des particules est la suivante:

| | |
|---|---|
| $SiO_2$ | 65,75 % |
| S exprimé en $SO_3$ | 0,85% |
| Fe exprimé en $Fe_2O_3$ | 0,10% |
| $Al_2O_3$ | 0,30% |
| CaO | 7,75 % |
| MgO | 0,75% |
| $Na_2O$ | 13,20% |
| $B_2O_3$ | 6,50% |
| ZnO | 1,60% |
| F | 0,85% |
| Divers | 0,35% |

Le caractère oxydé de la composition est analysé en mesurant le rapport $(Fe^{3+}/Fe^{2+})^2$ selon la méthode développée par J.L. BARTON, J.J. MASSOL et M.H. CHOPINET (XIII Congrès International du Verre Hambourg 1983 — Glastechnische Berichte 56, 1983). Dans le cas de cette préparation, le rapport est supérieur à 280.

Les particules sont mises en suspension dans un courant d'air à raison de 6 kg de particules par heure sous un débit d'air de 4,6 $m^3$/h. La vitesse d'injection dans le brûleur en position axiale et en fond de brûleur est de 20 m/s.

Le brûleur cylindrique du type décrit dans la publication de brevet FR-A-2 249 585 est alimenté en gaz de Lacq (méthane) et en air. Les injections d'air sont faites tangentiellement. Le gaz est introduit le premier. L'air est injecté sur les parois de la chambre de composition à deux niveaux dans le sens de progression de gaz. Les orifices d'alimentation en air sont orientés de façon que le sens de rotation des gaz, pour les deux niveaux, soient à l'opposé l'un de l'autre. Cette disposition tout en organisant un brassage intense évite de communiquer à l'ensemble un mouvement de rotation qui conduirait à projecter les particules sur les parois du brûleur.

Une chambre cylindrique de 100 mm de longueur fait suite à la partie du brûleur dans laquelle s'effectue l'alimentation. Dans cette chambre la température atteint son maximum. Elle est prolongée immédiatement par une chambre de trempe au sommet de laquelle pénètre l'air ambiant.

L'ensemble de ce dispositif est monté verticalement, le brûleur et l'injection des particules étant situés en haut de sorte que la circulation seffectue de haut en bas.

Des dispositifs de séparation, cyclones, filtres et éventuellement de tri font suite pour récupérer les particules expansées et les séparer des particules non expansées.

Les températures sont mesurées par des thermocouples. On mesure également les teneurs en CO, $CO_2$ et $O_2$ dans les gaz émis par le brûleur.

On s'est efforcé de montrer l'influence de la température sur l'expansion des particules en maintenant identiques, autant que possible, les autres conditions. La difficulté vient de ce que, pour un même dispositif, les variations de température sont obtenues d'ordinaire en changeant le régime des gaz alimentant le brûleur ce qui peut avoir une influence directe par exemple sur le caractère oxydo-réducteur, la consommation énergétique, etc. Les inventeurs ont cependant pû obtenir un certain nombre de résultats significatifs.

Deux comparaisons ont été effectuées. L'une pour des conditions de traitement nettement réductrices, et l'autre pour des conditions qui globalement sont légèrement oxydantes ce qui n'interdit pas, comme nous l'avons vu, le passage par des conditions transitoires réductrices lors de la traversée de la flamme.

Dans tous ces essais, les particules introduites présentent la même granulométrie. Il s'agit d'un mélange dont les dimensions pour 80% en poids des particules se situent entre 7 et 50 micromètres.

L'alimentation se fait à raison de 6 kg/h de particule dans le brûleur réglé pour ces essais à 125 thermies/heure.

Le rendement est exprimé en pourcentage en poids de particules expansées par rapport à la masse totale récupérée. Les particules expansées sont triées par flottation.

| N° | $n_a$ | T°C | Rd t% |
|---|---|---|---|
| 1 | 0,91 | 1645 | 55 |
| 2 | 0,91 | 1600 | 48 |
| 3 | 1,10 | 1600 | 43,4 |
| 4 | 1,11 | 1565 | 36,5 |

$n_a$ est le facteur d'air.

On constate pour les deux types de conditions oxydo-réductrice une différence sensible dans le rendement en microsphères formées lorsque la température est accrue d'une cinquantaine de degrés.

Il convient d'indiquer que les mesures de rendement sont relativement peu précis. La marge d'erreur doit se situer à environ 2 ou 3%. Il faut tenir compte de cette imprécision pour apprécier ces résultats. En particulier, la différence apparaissant entre les deux valeurs ou conditions réductrices est sans doute plus forte qu'elle n'est effectivement.

Quoiqu'il en soit ces mesures, ainsi que d'autres, non rapportées dans ce mémoire en raison de changements intervenus sur plusieurs paramètres simultanément, et qui pour cette raison se prêtent moins aisément à une comparaison, montrent sans équivoque l'influence de la température sur le rendement en microsphères.

*Exemple 2*

Dans une autre série d'essais, les inventeurs ont recherché l'influence de variations des conditions oxydo-réductrices dans le gaz de composition sur le rendement en microsphères. Dans des conditions aussi proches que possible pour les autres facteurs, ils ont fait varier les proportions d'air et de combustible dans le brûleur.

Les particules de départ sont les mêmes que celles utilisées à l'exemple 1. La granulométrie et le débit d'alimentation sont également identiques et le brûleur fonctionne à 125 thermies/heure.

Les résultats obtenus sont regroupés dans le tableau suivant:

| N° | $n_a$ | T°C | Rd t% |
|---|---|---|---|
| 5 | 0,82 | 1575 | 49,6 |
| 1 | 0,91 | 1645 | 55 |
| 6 | 1,05 | 1595 | 44,5 |
| 4 | 1,11 | 1565 | 36,5 |

Les valeurs trouvés en faisant varier le facteur d'air font apparaître un rendement plus élevé pour des conditions sensiblement réductrices.

Il est difficile de situer avec une grande précision l'amélioration obtenue et sourtout d'apprécier la signification du «maximum» constaté pour le facteur d'air 0,91, d'une part compte tenu du fait que les températures ne sont pas identiques — nous avons vu que la température influe sur le rendement — et d'autre part en raison de l'imprécision sur les mesures de rendement.

En pratique, de toutes façons, pour des raisons évidentes de consommation énergétique et pour obtenir des températures correspondant à celles définies selon l'invention, il n'est pas possible d'utiliser le brûleur dans des conditions très déséquilibrées dans le sens de la réduction. Mais il est significatif de constater l'influence de ces conditions réductrices sur le rendement.

Indépendamment de l'influence sur la production, les inventeurs ont vérifié l'importance des phénomènes oxydo-réducteurs dans la formation des microsphères en analysant par exemple le contenu des gaz occlus dans ces microsphères. En particulier la teneur en oxygène varie de façon très sensible. En atmosphère neutre ou oxydante, on décèle des quantités non négligeables d'oxygène et des quantités nettement moindres en atmosphère réductrice.

Ainsi par exemple pour les microsphères produites dans les essais 2 et 3, la teneur en oxygène est respectivement de 3,7% et 9,3% en volume. Cette différence tient à la réduction par l'hydrogène créé dans la flamme.

On remarque aussi, ce qui confirme les mécanismes de réaction indiqués plus haut, une teneur plus élevée en $SO_2$ gazeux dans les conditions réductrices. Pour les essais 2 et 3, cette teneur s'établit respectivement à 92,1% et 86% en volume. Cette différence s'explique par resolubilisation de $SO_3$ dans le verre lorsque l'on opère en milieu oxydant. Au contraire, en milieu réducteur, tout le gaz formé par décomposition des constituants soufrés du verre au cours de l'expansion est directement sous forme de $SO_2$ qui ne se redissout pratiquement pas.

L'action réductrice de l'atmosphère est aussi mise en évidence par l'analyse du verre des particules initiales et celle du verre formant les parois des microsphères. Le caractère plus ou moins oxydé est déterminable par le rapport $(Fe^{3+})^2/Fe^{2+})^2$ du verre. Pour les essais considérés 2 et 3, ce rapport est respectivement 2,1 et 5,8.

On remarque dans les deux essais que cette valeur est très inférieure à celle des particules initiales (280) ce qui traduit bien dans tous les cas la présence de mécanismes réducteurs au cours de ce traitement.

*Exemple 3*

Tous les essais rapportés précédemment ont été effectués avec des particules dont la granulométrie est relativement dispersée. Des essais ont été conduits avec les particules du même verre mais dont la sélection est faite sur une gamme plus resserrée. Cette fraction est telle que 10% en poids des particules présentent une dimension inférieure à 10 micromètres de même que 10% de ces particules ont plus de 30 micromètres.

L'essai n° 1 reproduit avec cette granulométrie, les autres paramètres étant inchangés, aboutit à un rendement de 64% en poids de particules expansées (plus de 95% en volume).

*Exemple 4*

Des essais ont été effectués pour mettre en évidence l'existence des différents stades du processus physico-chimique suivi par les particules soumises à des conditions soit réductrices, soit oxydantes, soit combinant ces deux types.

Les particules, dans un premier essai, sont introduites en fond de brûleur et traversent donc la flamme c'est-à-dire la zone relativement réductrice du front de flamme, puis la zone située en aval de ce front de flamme et qui est moins réductrice voire même neutre ou oxydante selon la valeur du facteur d'air.

Dans ce premier essai, la température de traitement est de 1550°C et le facteur d'air de 1,1. La combustion complète est donc oxydante.

L'analyse du contenu gazeux des microsphères permet de connaître avec une bonne certitude les mécanismes intervenus au cours de la transformation des particules.

Dans ces conditions, le contenu gazeux des microsphères introduites en fond de brûleur fait apparaître une teneur en $SO_2$ de 90,9% et en $O_2$ de 5,8%.

La réaction purement thermique devrait conduire normalement à un mélange en proportions égales de $SO_2$ et 1/2 $O_2$. Il y a donc bien eu un mécanisme réducteur au cours du traitement en dépit du fait que, globalement, le mélange gazeux est oxydant.

Les autres gaz décelés sont $CO_2$ et $N_2$, la vapeur d'eau n'est pas mesurée l'analyse étant faite par spectrographie de masse.

Dans un second essai, les particules sont introduites à une diazaine de centimètres en aval du front de flamme. Le mélange gazeux utilisé cette fois est légèrement réducteur (facteur d'air 0,92).

L'analyse montre cette fois 85,3% de $SO_2$ et 10,2% de $O_2$. L'oxygène est donc moins diminue en dépit des conditions globalement réductrices. Ce résultat, qui peut paraître paradoxal, établit en fait l'importance du passage dans la zone de craquage constituée par le front de flamme, zone dans laquelle les conditions réductrices sont les plus vives.

A titre de vérification, des essais effectués en introduisant les particules systématiquement en fond de brûleur et en faisant varier le facteur d'air, montrent une corrélation nette entre le caractère plus ou moins réducteur du mélange de combustion et la teneur en oxygène dans les microsphères, cette dernière étant d'autant plus faible que le mélange est plus réducteur.

*Exemple 5*

Le même verre qu'aux essais précédents est utilisé en sélectionnant les particules de faibles dimensions.

La fraction choisie se situe entre 8 et 15 micromètres.

L'essai est conduit dans des conditions réductrices avec un facteur d'air $n_a$ = 0,9. La température de traitement est de 1600°C.

Le rendement en poids de particules expansées par rapport au matériau traité s'élevé à 48% et la masse volumique de ces particules se situe à 0,3 g/$cm^3$ sur la partie sélectionnée par flottation.

On constate donc que, même pour des particules très petites, un bon rendement d'expansion peut être atteint dans les conditions de l'invention.

Un essai analogue sur une gamme de particules de dimensions faibles mais néanmoins supérieures aux précédentes montre qu'un très bon rendement peut être atteint. Dans ce cas, la fraction est de 8 à 20 micromètres. Le facteur d'air est toujours de $n_a$ = 0,9 et la température de 1600°C.

Le rendement obtenu est de 59% et la masse volumique des microsphères séparées par flottation est de 0,24 g/$cm^3$.

*Exemple 6*

Dans cet essai un verre à faible teneur en soufre a été utilisé. Le verre est un calcin de verre flotté dont la composition pondérale est la suivante:

| | |
|---|---|
| $SiO_2$ | 71,4 % |
| $SO_3$ | 0,3 % |
| $Fe_2O_3$ | 0,07% |
| $Al_2O_3$ | 0,4 % |
| CaO | 9,6 % |
| MgO | 4,0 % |
| $Na_2O + K_2O$ | 14,1 % |
| Divers | 0,13% |

Les particules utilisées présentent des dimensions comprises entre 7 et 50 micromètres. L'essai a été conduit à 1600°C et avec un facteur d'air de 0,9.

Le rendement, bien que plus faible que précédemment, reste intéressant en pratique. Il se situe à environ 25% en poids. La masse volumique des particules expansées est également élevée et voisine de 0,35 g/$cm^3$.

La mise en oeuvre de l'invention peut être effectuée en utilisant un dispositif tel que décrit dans ce qui suit, en faisant référence aux planches de dessins annexées dans lesquelles:

la figure 1 présente une vue schématique d'ensemble d'une installation de production des microsphères selon l'invention,

la figure 2 présente, en coupe, un modèle de dispositif de mise en suspension des particules avant leur injection dans le brûleur,

la figure 3 est une vue, en coupe, de la partie de l'installation dans laquelle l'expansion est effectuée,

la figure 4 est une vue partielle analogue à celle de la figure 3 montrant l'utilisation d'un autre type de brûleur.

Contrairement à ce qui a été proposé dans la littérature, l'expansion des particules par les gaz de combustion est avantageusement effectuée en faisant circuler les particules de haut en bas dans le même sens que les gaz de combustion.

Le choix des systèmes dans lesquels la circulation se fait de bas en haut résultait de l'idée suivante. Les particules expansées ayant une masse volumique moindre, un tri dynamique s'opère automatiquement entre ces particules expansées et celles qui ne le sont pas encore. Le maintien des particules non expansées dans les conditions de traitement était supposé permettre un accroissement du taux des particules finalement expansées.

La pratique montre que cette façon de procéder ne permet pas d'obtenir une amélioration de rendement, bien au contraire. La circulation de bas en haut nécessite en effet des flux gazeux à vitesse relativement faible, les particules étant de petites dimensions «flottent» facilement dans les courants trop intenses. Par suite, les gaz étant animés d'une vitesse limitée, le temps de séjour des particules dans les conditions de traitement est relativement long.

Si cet allongement permet l'expansion de certaines particules qui, dans d'autres conditions, résisteraient au traitement, il a pour contrepartie le collapsus d'une part non négligeable des particules qui se sont préalablement expansées rapidement pour les raisons que nous avons déjà indiquées. Par ailleurs, les particules tendent à former des agrégats sur les parois. Globalement, ce mode de traitement de bas en haut n'est pas avantageux.

En conséquence, selon l'invention, l'alimentation du dispositif dans lequel s'effectue l'expansion, un brûleur ou une enceinte en communication directe avec le brûleur, conduit les particules à circuler dans le même sens que le flux de gaz de combustion et de haut en bas.

Dans la forme présentée à la figure 1, le dispositif de production des microsphères comprend les éléments suivants: un dispositif 1 pour la mise en suspension des particules dans un courant gazeux et

leur transport jusqu'à la chambre de combustion d'un brûleur 2, le brûleur lui-même, une chambre 3 dans laquelle la combustion se poursuit, une enceinte de trempe 4. A cette partie de l'installation, dans laquelle s'effectue le traitement conduisant à l'expansion des microsphères, succède une série d'éléments dont le rôle est de séparer les sphères formées des gaz qui les entraînent d'une part et, d'autre part des poussières ou particules non expansées, ou encore d'agrégats de particules collées les unes aux autres. Sur la figure 1, l'ensemble des éléments de récupération des microsphères comprend un présélecteur 10, deux cyclones 5 et 6 et un filtre à manches 7.

L'alimentation en particules devant s'opérer de façon régulière et continue dans un milieu réactionnel gazeux, un mode préféré consiste à entraîner les particules par un courant gazeux.

La mise en suspension dans un courant gazeux s'effectue de façon connue par exemple à partir d'un lit fluidisé de particules, par exemple au moyen du dispositif présenté à la figure 2.

Sur la figure 2, le lit fluidisé 11 est alimenté en particules par l'orifice 12 ménagé à sa partie supérieure. Par cet orifice 12 s'évacue également l'air insufflé sous le lit de particules et entrant par l'orifice 13.

Une extrémité d'une conduite 14 est immergée dans le lit fluidisé 11. L'autre extrémité de cette conduite est reliée à une trompe venturi dans laquelle le gaz vecteur circule à vitesse élevée. La dépression engendrée dans le venturi 15 aspire les particules qui sont envoyées par la conduite 16 vers le brûleur.

Le débit et la vitesse des gaz transportant les particules sont choisis de manière à ce que les particules entraînées ne sédimentent pas au cours de leur trajet jusqu'à la chambre de réaction. Par ailleurs, lorsque de façon préférée l'alimentation se fait par le fond du brûleur, la vitesse et le débit du gaz véhiculant les particules doivent être maintenus dans des limites qui ne perturbent pas le bon fonctionnement du brûleur.

En pratique, le débit de gaz utilisé, le plus souvent de l'air, est très supérieur au débit de gaz nécessaire pour le simple transport pneumatique des particules. Cette quantité reste néanmoins habituellement très inférieure à celle qui est mise en jeu pour le fonctionnement du brûleur. Il convient cependant de tenier compte de cet apport d'air dans l'etablissement des conditions d'alimentation du brûleur.

Le gaz transportant les particules est de préférence de l'air ou un mélange air/gaz combustible alimentant ainsi au moins partiellement le brûleur dans lequel s'effectue l'expansion.

L'introduction de particules dans le brûleur est située de préférence de façon que, dans leur progression, les particules soient amenées à traverser le front de flamme. Par ailleurs, l'introduction est faite de manière à éviter que les particules ne soient projetées sur les parois du brûleur notamment après qu'elles aient été portées à une température correspondant à leur ramollissement. De préférence, l'introduction des particules se fait suivant la direction correspondant à l'axe du brûleur.

Le brûleur choisi pour l'expansion des particules doit d'abord permettre d'atteindre les températures requises qui se situent, comme nous l'avons vu, audessus de 1550°C. La quantité de chaleur dégagée par le brûleur doit aussi permettre de maintenir ces températures aux débits de particules envisagés.

Les brûleurs internes dans lesquels la flamme est «accrochée» à une grille ou à des barreaux ne donnent pas de résultats satisfaisants. On constate, aux régimes envisagés, des résonances acoustiques qui sont très préjudiciables au bon fonctionnement du dispositif.

Pour obtenir une bonne stabilité de flamme à haute température et sur une gamme de régimes de fonctionnement suffisamment étendue, il est avantageux, selon l'invention, d'utiliser un brûleur dans lequel la flamme se stabilise par exemple au contact des parois — tels que ceux du type décrit dans la demande de brevet français publiée sous le n° 2 524 610 — ou par une disposition particulière des admissions de gaz dans la chambre de combustion, comme par exemple dans les brûleurs décrits dans la publication de demande de brevet français n° 2 249 585.

Il est possible, comme le montrent les deux publications antérieures citées, d'utiliser un prémélange ou un mélange direct dans la chambre de combustion.

Pour accroître la température de fonctionnement, il est aussi possible de procéder à un préchauffage des gaz admis dans la chambre de combustion du brûleur.

Il est possible, également, d'utiliser un mélange gazeux plus énergétique par exemple un mélange enrichi en oxygène. Cette dernière solution n'est pas souhaitable, en règle générale, dans la mesure où elle entraîne un accroissement des coûts de production.

De préférence encore, le brûleur utilisé doit pouvoir ménager des zones dans lesquelles le mélange gazeux est réducteur. Une telle disposition est obtenue en particulier lorsque l'air nécessaire à la combustion (ou le mélange oxydant utilisé) est introduit à au moins deux niveaux sur le chemin de progression des gaz dans la chambre de combustion, l'un au moins de ces niveaux étant situé en aval de l'introduction du gaz combustible. Dans ces conditions, la combustion qui prend naissance en premier est nécessairement réductrice par défaut d'oxygène.

La longueur de la chambre de combustion 2 et de la chambre 3 est fonction du temps de séjour nécessaire pour le traitement efficace des particules. Bien que la vitesse de circulation soit grande (de l'ordre de 25 m/s), le traitement étant très rapide, la longueur de cette partie où s'effectue le traitement thermique est relativement limitée.

A titre indicatif, la longueur totale de la zone de combustion est avantageusement comprise entre 6 et 50 cm, et de préférence entre 10 et 25 cm.

Cette partie du dispositif, dans laquelle règne la température la plus élevée, est limitée en aval par la zone dans laquelle s'effectue l'introduction massive d'air à température ambiante pour assurer la «trempe» des microsphères formées.

La brieveté du séjour dans la zone de traitement thermique évite, comme nous l'avons vu, les risques de collapsus et d'agrégation des particules ou de collage sur les parois. Pour diminuer encore les risques

de collage sur les parois de la chambre 3, celles-ci sont avantageusement soumises à un refroidissement intense maintenant leur température à une valeur inférieure à celle à laquelle le verre reste ramolli et donc collant.

Le refroidissement des parois de la chambre 3 est obtenu, par exemple, au moyen d'une chemise dans laquelle est aménagée une circulation d'eau ou d'air.

Vis-à-vis des techniques antérieures, la chambre de combustion utilisée selon l'invention présente plusieurs caractéristiques avantageuses pour la mise en oeuvre de ces procédés. Ainsi, de préférence, la totalité de la section de la chambre est en pratique le siège de la combustion. Autrement dit, la flamme occupant toute la section, les particules qui passent dans la chambre doivent nécessairement passer dans la flamme et donc franchir les différentes étapes oxydo-réductrices aménagées.

La section de la chambre de combustion est, en outre, sensiblement constante sur toute la longueur correspondant à la zone d'expansion des particules, c'est-à-dire dans la partie qui précède l'introduction de l'air de trempe.

Le confinement de la réaction dans une chambre de combustion de section relativement restreinte garantit le maintien d'une température élevée et un temps de séjour très bref, conditions qui sont particulièrement recherchées selon l'invention.

Un exemple de chambre de combustion utilisé selon l'invention est représenté à la figure 3.

Les particules et le gaz qui les transporte est introduit par la conduite 17 dans l'axe du dispositif.

Le brûleur, de forme cylindrique, comporte une alimentation en gaz 18. De la chambre annulaire 19, le gaz est envoyé par les orifices 20 dans la zone de combustion.

L'air est amené par la conduite 21 dans une chambre annulaire 22 et passe dans la zone de combustion par deux séries d'orifices 23 et 24. Ces derniers sont orientés de façon à communiquer à l'air introduit des mouvements de rotation de sens inverses.

Dans le mode représenté à la figure 4, le brûleur du type décrit dans la demande de brevet français n° 2 524 610 est constitué par une chambre à parois réfractaires 28. Comme pour le mode représenté à la figure 3, l'admission des particules s'effectue au sommet de la chambre par la canalisation 17.

Une double enveloppe 29 entoure la chambre de combustion. Dans cette enveloppe circule le mélange combustible amené par la conduite 30.

Au cours de son passage dans la double enveloppe le long des parois externes de la chambre, le mélange se réchauffe. Il est introduit dans la chambre par des orifices 31 creusés dans la base réfractaire.

La position des orifices 31 est choisie de façon que l'admission du mélange se fasse à contre-courant de la circulation des gaz de combustion et le long des parois réfractaires. Cette disposition est particulièrement avantageuse pour atteindre des températures élevées et une grande stabilité de fonctionnement.

Les deux brûleurs précédents peuvent être utilisés avec un apparaillage qui pour le restant peut être identique. La figure 3 illustre la partie de cet appareillage faisant immédiatement suite au brûleur.

La chambre de combustion est prolongée par un élément 25 comprenant une paroi réfractaire enveloppée dans une chemise métallique. Toujours dans le prolongement, la chambre de combustion 3 est ensuite délimitée par une double paroi métallique 27 dans laquelle circule de l'eau de refroidissement.

On constate, en maintenant la température de cette paroi à une valeur inférieure à celle à laquelle les particules de verre en fusion peuvent adhérer, que non seulement on évite la formation de dépôts ou d'agrégats sur les parois, mais encore que la présence de cette parois refroidie ne constitue pas une gêne sensible à l'obtention des conditions de températures élevées nécessaires.

Compte tenu des verres ordinairement utilisés, la température de la paroi est avantageusement maintenue inférieure à 150°C.

La trempe est réalisée dans une enceinte de volume relativement grand par rapport à celui de la chambre de combustion.

L'air de trempe est admis à la partie supérieure de cette enceinte par les ouvertures 9. Dans cette partie supérieure débouchent également les gaz et les particules provenant de la chambre 3.

L'admission de l'air dans la chambre de trempe est réglée par l'aspiration entretenue à l'extrémité des éléments du dispositif servant à la séparation gaz/solides.

L'abaissement de la température des gaz circulant, consécutif à l'introduction d'air ambiant est complété pendant le cheminement dans l'enceinte de trempe par les échanges thermiques qui s'opérent par les parois de cette enceinte au contact de l'air ambiant.

Dans l'enceinte de trempe, la section est également suffisante pour réduire la vitesse de circulation des gaz. Cette réduction de vitesse permet, au pied de l'enceinte, d'effectuer un premier tri dynamique. Les particules les plus grosses formées essentiellement par des agrégats se déposent dans le préselecteur 10.

Dans les conditions de travail indiquées précédemment, la fraction de produit initial formant des agrégats ne dépasse normalement pas 1 à 2% en poids du produit initial.

Les différentes sections dans le présélecteur et les conditions d'aspiration sont aussi réglées de façon que les particules expansées soient entraînées hors du présélecteur par les gaz et se déposent dans le ou les moyens utilisés pour séparer les particules des gaz qui les véhiculent.

Sur la figure 1, ces moyens sont constitués par deux cyclones 5 et 6 et par un dispositif de filtre à manches 7 dont la sortie est en communication avec un ventilateur d'aspiration non représenté.

La récupération des microsphères se fait au bas des cyclones et des filtres à manches.

En fonction des caractéristiques des moyens de séparation et de la vitesse de circulation des gaz, il est possible de réaliser un tri des particules. Ainsi, normalement, les particules les plus fines se retrouvent séparées au niveau du filtre à manches.

**Revendications**

1. Procédé de production de microsphères creuses à partir de particules d'un verre silico-sodo-calcique renfermant des composés du soufre, caractérisé en ce que les particules mises en suspension dans un courant gazeux passent dans la chambre de combustion d'un brûleur à une température supérieure d'au moins 100°C à celle d'élaboration du verre constituant les particules traitées, à partir des matériaux de base traditionnels tels que sable, chaux, carbonate de sodium, sulfate de sodium et autres, le traitement thermique étant maintenu pendant une période qui n'excède par 0,1 seconde et les particules étant ensuite figées par refroidissement brutal.

2. Procédé selon la revendication 1 dans lequel la température de traitement des particules se situe au-dessus de 1500°C.

3. Procédé selon l'une des revendications précédentes dans lequel la température de traitement est comprise entre 1500 et 1700°C.

4. Procédé selon la revendication 3 dans lequel la température du mélange gazeux portant les particules est ramenée au-dessous de 1000°C.

5. Procédé selon l'une quelconque des revendications précédentes dans lequel l'alimentation du brûleur est conduite avec un facteur d'air (rapport de la quantité d'air effectivement introduite à la quantité d'air nécessaire pour avoir une combustion stoechiométrique) qui est inférieur à 1,1.

6. Procédé selon la revendication 5 dans lequel le facteur d'air est supérieur à 0,75.

7. Procédé selon la revendication 6 dans lequel le facteur d'air est compris entre 0,75 et 1.

8. Procédé selon la revendication 7 dans lequel le facteur d'air est compris entre 0,8 et 0,95.

9. Procédé selon l'une des revendications 1 à 4 dans lequel le facteur d'air est choisi de telle sorte qu'à la température atteinte dans le brûleur, le taux instantané d'hydrogène provenant du craquage du combustible soit inférieur à 4%.

10. Procédé selon l'une des revendications 1 à 4 dans lequel les microsphères sont traitées thermiquement dans la flamme d'un brûleur, les alimentations en gaz combustible et en gaz oxydant étant disposées sur le trajet des particules de façon que celles-ci franchissent d'abord une zone d'atmosphère réductrice puis une zone d'atmosphère neutre ou légèrement oxydante.

11. Procédé selon l'une des revendications précédentes dans lequel les dimensions moyennes des particules de verre traitées sont inférieures à 10 micromètres.

12. Procédé selon l'une des revendications 1 à 11 dans lequel la teneur pondérale en soufre dans le verre des particules traitées est inférieure à 0,1%.

13. Installation pour la production de microsphères creuses à partir de particules d'un verre silico-sodo-calcique, contenant du soufre, comprenant des moyens (1) pour la mise en suspension des particules dans un courant gazeux, lequel est dirigé vers une chambre de combustion (3) d'un brûleur (2) charactérisée en ce que le brûleur (2) est alimenté de façon à entretenir une combustion à une température supérieure à 1500°C, l'introduction des particules dans le brûleur étant située de façon que leur mouvement s'effectue dans le sens de progression des gaz de combustion et la longueur de la chambre de combustion (3) étant choisie en fonction du régime de combustion adopté, de façon que le temps de séjour moyen des particules soit au plus égal à 0,1 seconde, une chambre (4) de trempe faisant suite immédiatement à la chambre de combustion, laissant pénétrer abondamment l'air ambiant sous l'effet d'une aspiration entretenue depuis l'extrémité des moyens de séparation solides/gaz, et des moyens de séparation (10, 5, 6, 7) pour recueillir les particules transportées par les gaz avant le rejet de ces derniers.

14. Installation selon la revendication 13 dans laquelle le brûleur (2), la partie qui lui fait suite à la chambre de combustion (3) et la chambre de trempe (4) sont disposés les uns au-dessus des autres de façon que le trajet des particules et des microsphères expansées se fasse de haut en bas.

15. Installation selon la revendication 14 dans laquelle la chambre de combustion (3) présente sensiblement la même section sur toute sa longueur.

16. Installation selon l'une des revendications 13 à 15 dans laquelle la longueur de la chambre de combustion (3) est comprise entre 6 et 50 cm.

17. Installation selon l'une des revendications 13 à 16 dans laquelle la chambre de combustion (3), dans sa partie la plus proche de la chambre de trempe (4), est délimitée par une enceinte refroidie.

18. Installation selon la revendication 16 dans laquelle la partie de la chambre de combustion (3) la plus proche de la chambre de trempe (4) est délimitée par une double paroi (27) dans laquelle circule un liquide de refroidissement, dans des conditions telles que la température de la paroi la plus chaude ne dépasse pas 150°C.

19. Installation selon l'une des revendications 13 à 18 dans laquelle l'alimentation en air (ou en mélange oxydant) est effectuée à au moins deux niveaux (23, 24) sur le chemin de progression des gaz dans la chambre de combustion (3), l'un (24) au moins de ces niveaux se situant en aval de l'introduction du gaz combustible (20) et l'alimentation en particules (17) étant effectuée en amont de ce deuxième niveau d'alimentation en air (24).

**Patentansprüche**

1. Verfahren zur Herstellung von Mikrohohlkügelchen aus Schwefelverbindungen enthaltenden Siliko/Natrium/Kalzium-Glasteilchen, gekennzeichnet durch Einführen der in einem Gasstrom in Suspension befindlichen Teilchen in die Verbrennungskammer eines Brenners mit einer Temperatur von mindestens 100°C grösser als die Temperatur der die behandelndenTeilchen bildenden Glasschmelze aus Materialien auf herkömmlicher Basis, wie insbesondere Sand, Kalk, Natriumkarbonat, Natriumsulfat und anderem, wobei die Wärmebehandlung während einer Periode aufrechterhalten wird, die 0,1 Sekunden nicht übersteigt, und die Teilchen nachfolgend durch schroffe Abkühlung verfestigt werden.

2. Verfahren nach Anspruch 1, dadurch gekennzeichnet, dass die Behandlungstemperatur für die Teilchen über 1500°C beträgt.

3. Verfahren nach einem der vorhergehenden Ansprüche, dadurch gekennzeichnet, dass die Behandlungstemperatur zwischen 1500 und 1700°C beträgt.

4. Verfahren nach Anspruch 3, dadurch gekennzeichnet, dass die Temperatur des die Teilchen aufweisenden gasförmigen Gemisches auf eine Temperatur unterhalb 1000°C zurückgeführt wird.

5. Verfahren nach einem der vorhergehenden Ansprüche, dadurch gekennzeichnet, dass die Speisung des Brenners mit einem Luftfaktor (Verhältnis der Menge an effektiv eingeführter Luft zur Menge an Luft, die für eine stöchiometrische Verbrennung erforderlich ist) kleiner als 1,1 erfolgt.

6. Verfahren nach Anspruch 5, dadurch gekennzeichnet, dass der Luftfaktor grösser als 0,75 ist.

7. Verfahren nach Anspruch 6, dadurch gekennzeichnet, dass der Luftfaktor zwischen 0,75 und 1 beträgt.

8. Verfahren nach Anspruch 7, dadurch gekennzeichnet, dass der Luftfaktor zwischen 0,8 und 0,95 beträgt.

9. Verfahren nach einem der Ansprüche 1 bis 4, dadurch gekennzeichnet, dass der Luftfaktor derart gewählt ist, dass bis zur erreichtenTemperatur im Brenner der momentane Betrag an Wasserstoff, welcher das Kräcken des Brennstoffes hervorruft, kleiner als 4% ist.

10. Verfahren nach einem der Ansprüche 1 bis 4, dadurch gekennzeichnet, dass die Mikrokugeln in der Flamme eines Brenners wärmebehandelt werden, wobei die Speisung an Verbrennungsgas und oxidierendem Gas derart auf der Bahn der Teilchen erfolgt, dass diese zuerst eine Zone mit reduzierender Atmosphäre kreuzen und dann eine neutrale oder leicht oxidierende Zone.

11. Verfahren nach einem der vorhergehenden Ansprüche, dadurch gekennzeichnet, dass die durchschnittlichen Abmessungen der behandelten Glasteilchen kleiner als 10 Mikrometer betragen.

12. Verfahren nach einem der Ansprüche 1 bis 11, dadurch gekennzeichnet, dass der Gewichtsanteil von Schwefel im Glas der behandelten Teilchen kleiner als 0,1% ist.

13. Vorrichtung zur Herstellung von Mikrohohlkügelchen aus schwefelhaltigen Siliko/Natrium/Kalzium-Glasteilchen mit einer Einrichtung, mit der die Teilchen in Suspension in einen Gasstrom gebracht werden, welcher zu einer Verbrennungskammer (3) eines Brenners (2) geführt wird, dadurch gekennzeichnet, dass der Brenner (2) derart gespeist wird, dass eine Verbrennungstemperatur grösser als 1500°C erzeugt wird, dass die Eingabe der Teilchen in den Brenner derart erfolgt, dass die Bewegung der Teilchen im Sinne der Bewegung des Verbrennungsgases erfolgt, und dass die Länge der Verbrennungskammer (3) abhängig vom Verbrennungszustand gewählt ist, so dass die mittlere Verweilzeit der Teilchen höchstens gleich 0,1 Sekunden beträgt, dass der Verbrennungskammer unmittelbar eine Abschreckkammer (4) folgt, wobei man Umgebungsluft im Überschuss unter Saugwirkung von dem Ende der Gas/Festkörper-Trenneinrichtung her durchströmen lässt, und dass eine Trenneinrichtung (10, 5, 6, 7) zur Wiedergewinnung der durch das Gas transportierten Teilchen vor dem Abführen der Gase vorgesehen ist.

14. Vorrichtung nach Anspruch 13, dadurch gekennzeichnet, dass der Teil des Brenners (2) der der Verbrennungskammer (3) folgt, und die Abschreckkammer (4) derart übereinander angeordnet sind, dass die Bewegungsbahn der Teilchen und der expandierten Mikrokügelchen von oben nach unten verläuft.

15. Vorrichtung nach Anspruch 14, dadurch gekennzeichnet, dass die Verbrennungskammer (3) im wesentlichen denselben Querschnitt über die gesamte Länge aufweist.

16. Vorrichtung nach einem der Ansprüche 13 bis 15, dadurch gekennzeichnet, dass die Länge der Verbrennungskammer (3) zwischen 6 und 50 cm beträgt.

17. Vorrichtung nach einem der Ansprüche 13 bis 16, dadurch gekennzeichnet, dass die Verbrennungskammer (3) an ihrem der Abschreckkammer (4) nächstliegenden Abschnitt von einem Kühlmantel begrenzt ist.

18. Vorrichtung nach Anspruch 16, dadurch gekennzeichnet, dass der der Abschreckkammer (4) nächstliegende Abschnitt der Verbrennungskammer (3) durch eine Doppelwand (27) begrenzt ist, in welcher eine Kühlflüssigkeit derart zirkuliert, dass die grösste Wandtemperatur 150°C nicht übersteigt.

19. Vorrichtung nach einem der Ansprüche 13 bis 18, dadurch gekennzeichnet, dass die Speisung an Luft (oder einem oxidierenden Gemisch) auf mindestens zwei Niveaus (23, 24) auf dem Weg des Gases in die Verbrennungskammer (3) erfolgt, wobei eines (24) der Niveaus sich stromabwärts der Einführung des Verbrennungsgases (20) befindet und die Speisung mit Teilchen (17) stromaufwärts des zweiten Niveaus der Luftzufuhr (24) erfolgt.

**Claims**

1. A method of making hollow microspheres from particles of silica-soda-calcia glass containing sulphur compounds, characterised in that the particles suspended in a gaseous stream pass into a combustion chamber having a burner at a temperature at least 100°C higher than that at which the glass forming the treated particles is made, from the usual base materials such as sand, calcium oxide, sodium carbonate, sodium sulphate and other materials, the heat treatment being continued for a period not exceeding 0.1 seconds and the particles then being fixed by sudden cooling.

2. A method according to claim 1, in which the treatment temperature of the particles is above 1500°C.

3. A method according to either of the preceding claims, in which the treatment temperature is from 1500 to 1700°C.

4. A method according to claim 3, in which the temperature of the gas mixture carrying the particles is brought below 1000°C.

5. A method according to any one of the preceding claims, in which the burner is fed with an air factor (ratio of the quantity of air effectively introduced to the quantity of air required for stoichiometric combustion) less than 1.1.

6. A method according to claim 5, in which the air factor is greater than 0.75.

7. A method according to claim 6, in which the air factor is from 0.75 to 1.

8. A method according to claim 7, in which the air factor is from 0.8 to 0.95.

9. A method according to any one of claims 1 to 4, in which the air factor is selected so that at the temperature reached in the burner, the instantaneous content of hydrogen from cracking of the fuel is less than 4%.

10. A method according to any one of claims 1 to 4, in which the microspheres are heat treated in the flame of a burner, the feeds of combustible gas and oxidising gas being arranged on the path of the particles so that the particles first pass through a reducing atmosphere and then through a neutral or slightly oxidising atmosphere.

11. A method according to any one of the preceding claims, in which the average dimensions of the glass particles treated are less than 10 micrometres.

12. A method according to any one of claims 1 to 11, in which the weight content of sulphur in the glass of the particles is less than 0.1%.

13. Apparatus for production of hollow microspheres from particles of a silica-soda-calcia glass, containing sulphur, comprising means (1) for suspending the particles in a gaseous stream, which is directed to a combustion chamber (3) having a burner (2) characterised in that the burner (2) is fed so as to effect combustion at a temperature greater than 1500°C, the introduction of particles to the burner being positioned such that their movement takes place in the direction of movement of the combustion gas and the length of the combustion chamber (3) being selected as a function of the combustion conditions used, so that the average dwell time of the particles is not more than 0.1 second, a tempering chamber (4) immediately following the combustion chamber allowing entry of a large amount of air under the effect of aspiration maintained from the end of means for solid/gas separation, and separation means (10, 5, 6, 7) for recovery of particles transported by the gas before discharge of the latter.

14. Apparatus according to claim 13, in which the burner (2), the part which follows the combustion chamber (3) and the tempering chamber (4) are arranged one above another so that the particles and expanded microspheres move downwardly.

15. Apparatus according to claim 14, in which the combustion chamber (3) has substantially the same cross-section throughout its length.

16. Apparatus according to any one of the claims 13 to 15, in which the length of the combustion chamber (3) is from 6 to 50 cm.

17. Apparatus according to any one of the claims 13 to 16, in which the combustion chamber (3), at its part closest to the tempering chamber (4), is defined by a cooled enclosure.

18. Apparatus according to claim 16, in which the part of the combustion chamber (3) closest to the tempering chamber is defined by a double wall (27) in which a cooling liquid circulates, under conditions such that the temperature of the hottest wall does not exceed 150°C.

19. Apparatus according to any one of the claims 13 to 18, in which feed of air (or of oxidising mixture) is carried out at at least two levels (23, 24) in the path of gases in the combustion chamber (3), at least one (24) of these levels being downstream of the introduction of combustible gas (20) and the feed of particles (17) being carried out upstream of this second level of air feed (24).

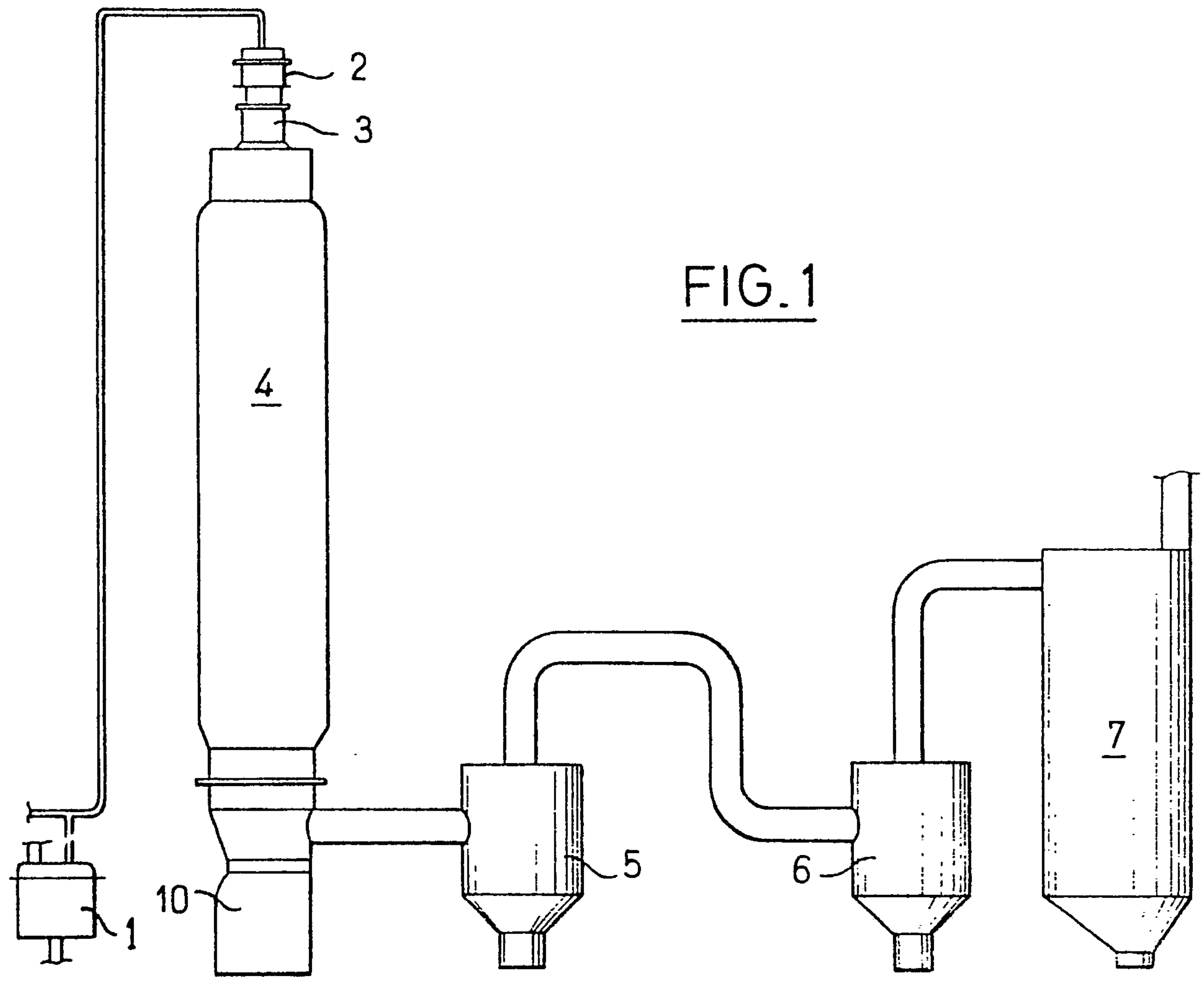


FIG. 1

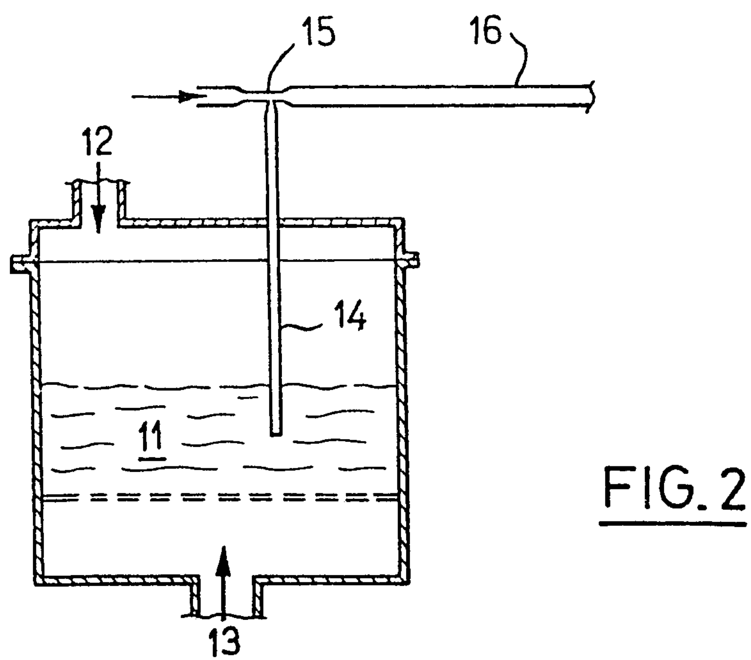


FIG. 2

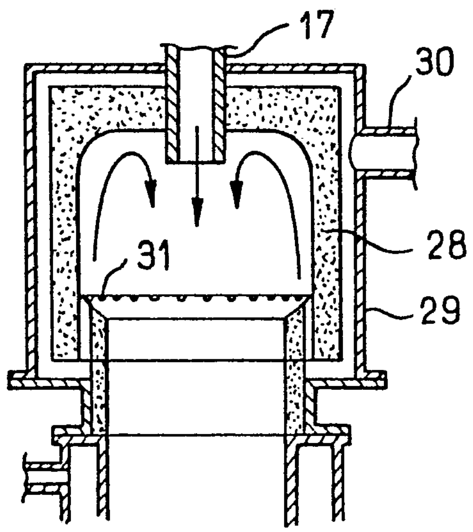


FIG.4

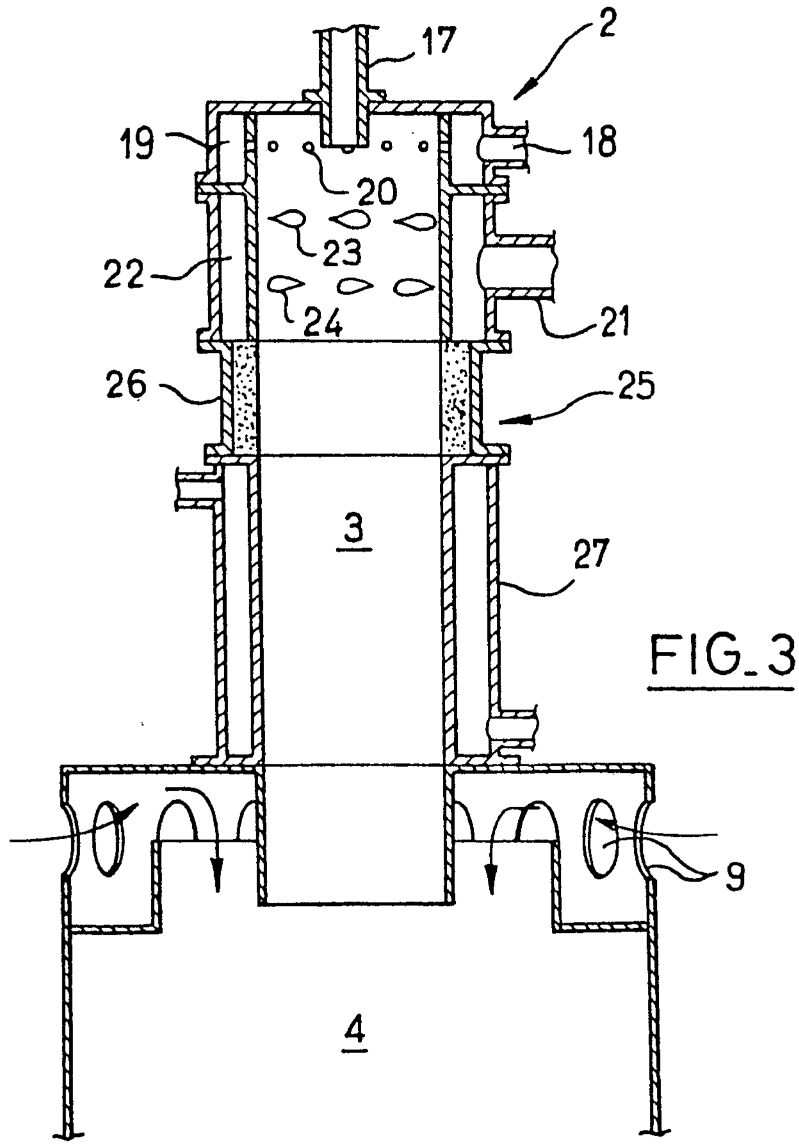


FIG.3